# EUROPEAN PATENT APPLICATION

(11) **EP 1 132 621 A1**
(43) Date of publication of application: **12.09.2001**
(21) Application number: 00954972.6
(22) Date of filing: 24.08.2000
(51) Int. Cl.: F04C 29/10, F04C 29/04, F04C 18/16, F25B 1/047

(54) **SCREW COMPRESSOR AND REFRIGERATOR**

(30) Priority: 22.09.1999 JP 26848099
(71) Applicant: Daikin Industries, Ltd., Osaka-shi, Osaka 530-8323 (JP)
(72) Inventor: OTSUKA, Kaname Yodogawa Works Of Daikin Ind., ltd., Settsu-shi, Osaka 566-0044 (JP); YONEDA, Hiroyuki Yodogawa Wks Of Daikin Ind., Ltd., Settsu-shi, Osaka 566-0044 (JP)
(74) Representative: HOFFMANN - EITLE
(86) International application number: JP0005687
(87) International publication number: WO0121958

(57) **Abstract**

There are provided a screw compressor which enables to increase efficiency in the case of partial load and a refrigerating device which can develop the effect of an economizer circuit even in the partial load operation. The rotational speed of a motor 27 is controlled by an inverter 22 to implement capacity control of a screw compressor main body 21. The screw compressor main body 21 is not equipped with a slide valve, so that even in partial load, in a state that compression chambers C1 and C2 are sealed, a refrigerant is ejected from economizer passages to the compression chambers C1 and C2. Therefore, even when a refrigerant is ejected to the compression chambers C1 and C2, the capacity of a sucked refrigerant gas does not decrease. In the case of partial load, the rotational speed of the motor 27 and a screw rotor 33 is lowered, and the cooling effect due to the refrigerant ejected from the economizer passages is exerted without reducing the capacity of a refrigerant gas sucked to the compression chambers, which improves the efficiency in the case of partial load.

## Description

### TECHNICAL FIELD

The present invention relates to a screw compressor for compressing refrigerant gas or the like and a refrigerating device using the screw compressor.

### BACKGROUND ART

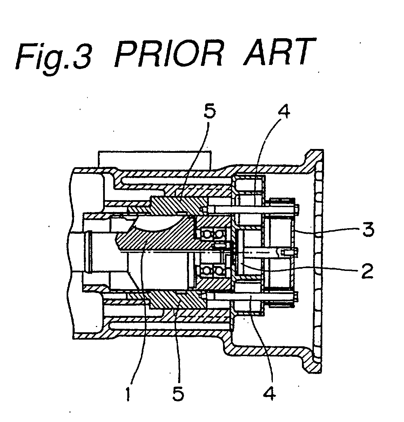

Conventionally, a screw compressor comprises a compressing portion comprised of a cylinder and a screw rotor fitted into the cylinder in a rotatable manner, and a motor for rotationally driving the screw rotor at specified speed. As shown in Fig. 3, the screw compressor is of a structure in which the position of a screw rotor 1 to start compression is controlled by slide valves 5, 5 which are driven by a piston 2 via a valve arm 3 and coupling rods 4, 4 to perform capacity control. More particularly, in the case of full load, the slide valves 5, 5 are retracted in the condition in which the motor is given the same rotational speed as in the case of full load, by which the start of compression by the screw rotor 1 is delayed to decrease discharge capacity.

However, the above-stated conventional screw compressor is capacity-controlled by the slide valves 5, 5 in the case of partial load, where gas once compressed is bypassed to an inlet side, which causes a problem of poor partial load efficiency.

Further, though not shown in drawings, some refrigerating devices having the screw compressor including the slide valve have an economizer circuit. The economizer circuit has a structure in which a refrigerant is ejected from the upstream of an expansion valve to a compression chamber formed in between a cylinder and a screw rotor to lower the temperature of a liquid refrigerant supplied to an evaporator and to reduce enthalpy of the liquid refrigerant, by which refrigerating capability is increased and refrigerating cycle efficiency is improved. However, although the economizer circuit is effective in the case of full load, it is less effective in the case of partial load where the slide valve is retracted, since a refrigerant gas is ejected to the compression chamber before the compression chamber is sealed, which decreases the volume of the refrigerant gas sucked from the evaporator side of the screw compressor. Therefore, in the case where the screw compressor is capacity-controlled by the slide valve, there is a problem that if the economizer circuit is provided, the efficiency is not improved in the case of partial load.

### DISCLOSURE OF THE INVENTION

Accordingly, it is an object of the present invention to provide a screw compressor which enables to increase efficiency in the case of partial load and a refrigerating device which enables to put forth effects of an economizer circuit even in the partial load range.

In order to accomplish this object, the present invention provides a screw compressor comprising:
a screw compressor main body without a slide valve, comprised of a compressing portion having a cylinder and a screw rotor fitted into the cylinder in a rotatable manner, a motor for driving the screw rotor, and an economizer passage for ejecting a refrigerant gas to a compression chamber present in between the cylinder and the screw rotor of the compressing portion; and
an inverter for controlling a rotational speed of the motor to control a capacity of discharge from the compressing portion.

According to the above constitution, control on motor rotation using the inverter enables continuous control on the capacity of wide range of the screw compressor main body. Consequently, compared to the conventional bypass-type capacity control method, the present capacity control method changes displacement of the compressor, so that efficiency in the case of partial load is increased.

Further, the screw compressor main body does not include a slide valve, so that in the case of partial load, in the state that the compression chamber is sealed, a refrigerant gas or a diphase refrigerant is discharged from the economizer passage to the compression chamber. Therefore, even if the refrigerant is ejected from the economizer passage to the compression chamber, the capacity of a sucked refrigerant gas in the screw compressor main body is not reduced. Therefore, in the case of partial load, the rotational speed of the motor and the screw rotor is lowered, and the refrigerant ejected from the economizer passage can exert a cooling effect without reducing the capacity of the refrigerant gas sucked to the compression chamber, which implements remarkable increase of the efficiency in the case of partial load.

As described above, increased efficiency and high-speed rotation of the motor by using the inverter enables downsizing of the screw compressor main body and reduction of production costs of the screw compressor.

A refrigerating device of the present invention comprises a main refrigerant circuit connecting the screw compressor, a condenser, expansion means, and an evaporator in a loop shape; and
an economizer circuit connecting the main refrigerant circuit on a downstream side of the condenser and an upstream side of the evaporator to the economizer passage.

According to the above constitution, there is provided the above screw compressor, so that the function and effect of the screw compressor are performed. Furthermore, the economizer circuit ejects the refrigerant cooled in the condenser to the compression chamber through the economizer passage, so that a pressurized refrigerant gas inside the compression chamber is surely cooled.

In the refrigerating device of one embodiment, the expansion means are comprised of a first expansion means and a second expansion means, and the economizer circuit connects the main refrigerant circuit between the first expansion means and the second expansion means to the economizer passage.

According to the above constitution, the economizer circuit performs adiabatic expansion of a liquid refrigerant which is liquidized by the condenser in the first expansion means, and ejects only a gas phase thereof to the compression chamber through the economizer passage. Here, the enthalpy of the liquid refrigerant lead to the evaporator is lowered to the level equivalent to a saturation pressure value on the upstream of the second expansion means, as a consequence of which the cooling capability is increased and further the refrigerating cycle efficiency is improved.

In one embodiment, the main refrigerant circuit between the condenser and the evaporator has a gas-liquid separator, and a refrigerant gas is supplied from the gas-liquid separator to the compression chamber through the economizer circuit and the economizer passage.

According to the above constitution, after a refrigerant in the main refrigerant circuit is separated into a liquid refrigerant and a gas refrigerant in the gas-liquid separator, the refrigerant gas is ejected to the compression chamber through the economizer circuit and the economizer passage. This enables to eject only a gas refrigerant to the compression chamber, and thereby prevents liquid compression, while at the same time, the ratio of a liquid refrigerant in the refrigerant sent to the evaporator increases, which improves the refrigerating cycle efficiency.

In one embodiment, in the case of capacity control where a rotational speed of the motor is controlled by the inverter to perform partial load operation of the screw compressor, the gas refrigerant separated in the gas-liquid separator is ejected to the compression chamber through the economizer circuit and the economizer passage.

According to the above constitution, in the case of capacity control where capacity control is performed by the rotational speed of the screw rotor to perform partial load operation with the same compression start position as in the case of full load, a gas refrigerant separated in the gas-liquid separator is ejected through the economizer circuit and the economizer passage to the compression chamber between the cylinder and the screw rotor after the compression chamber is sealed. Therefore, though the refrigerant gas is ejected from the economizer passage to the compression chamber, the capacity of a gas refrigerant sucked from the evaporator side of the screw compressor main body does not decrease. Therefore, in the case of partial load, the rotational speed of the motor and the screw rotor is lowered, and the gas refrigerant ejected from the economizer passage can exert a cooling effect without reducing the capacity of the gas refrigerant sucked to the compression chamber, which remarkably improves the efficiency in the case of partial load.

In one embodiment, the economizer circuit is interconnected through the economizer passages to a first compression chamber and a second compression chamber formed in between the cylinder and the screw rotor.

According to the above constitution, the economizer circuit is interconnected through the economizer passages to both the first and the second compression chambers, which surely exerts the economizer effect.

### BRIEF DESCRIPTION OF THE DRAWINGS

Fig. 1 is a longitudinal cross sectional view showing main part of a screw compressor according to an embodiment of the present invention;
Fig. 2 is a circuitry diagram of a refrigerating device according to an embodiment of the present invention; and
Fig. 3 is a longitudinal cross sectional view of main part of a screw compressor of the prior art.

### DETAILLED DESCRIPTION OF THE INVENTION

The embodiments of the present invention will be described hereinafter with reference to the drawings.

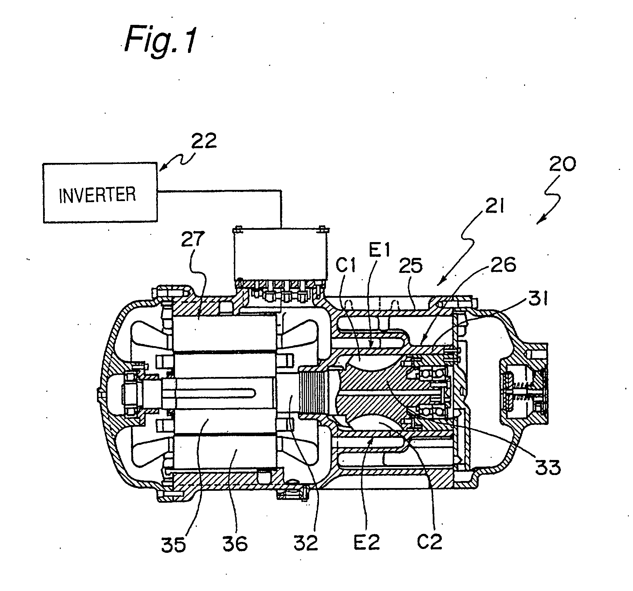

As shown in Fig. 1, the screw compressor 20 consists of a screw compressor main body 21 and an inverter 22. The screw compressor main body 21 has a compressing portion 26 and a motor 27 inside a casing 25.

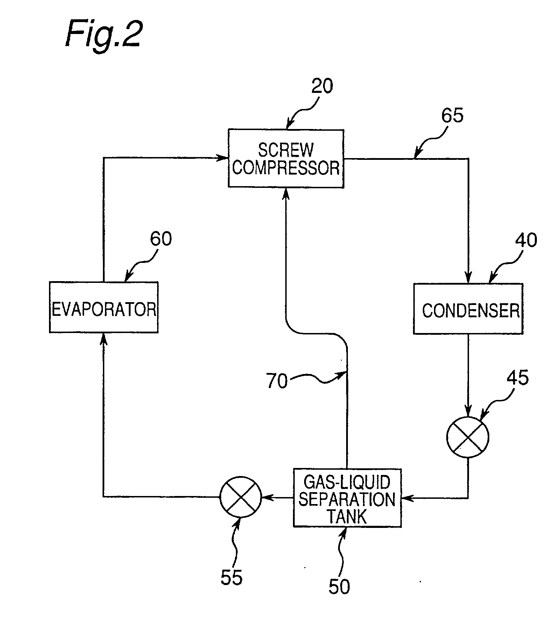

In the compressing portion 26, a screw rotor 33 integrally formed at one end of a main axis 32 is fitted in an rotatable manner into a cylinder 31 which is formed integrally with the casing 25. The compressing portion 26 does not include a slide valve, so that capacity control is performed by controlling the rotational speed of the motor 27 by the inverter 22. In addition, though not illustrated, there is provided an economizer passage interconnected to a compression chamber C1 between the cylinder 31 and the screw rotor 33, which is located slightly behind the portion shown with an arrow E1 from the front side of the paper carrying Fig. 1, while at the same time, there is provided an economizer passage interconnected to a compression chamber C2 between the cylinder 31 and the screw rotor 33, which is located slightly behind the portion shown with an arrow E2 from the front side of the paper. The economizer passages are interconnected to an economizer circuit 70 shown in Fig. 2.

On the other hand, to the other end of the main axis 32, there is fixed a rotor 35 of the motor 27, and a stator 36 of the motor 27 is fixed to the casing 25. The motor 27 is connected to the inverter 22.

Fig. 2 is a circuitry diagram of a refrigerating device having the screw compressor 20. In the refrigerating device, there are connected in sequence in a loop shape, the screw compressor 20, a condenser 40, a first expansion valve 45 as one example of the first expansion means, a gas-liquid separation tank 50, a second expansion valve 55 as one example of the second expansion means, and an evaporator 60, to form a main refrigerant circuit 65. A gaseous phase portion of the gas-liquid separation tank 50 is connected to the economizer passages of the screw compressor 20 via the economizer circuit 70.

In the above-configured screw compressor 20, the rotational speed of the motor 27 is controlled in accordance with the loads by the inverter 22 to perform wide-range capacity control of the screw compressor main body 21. In the case of partial load in the screw compressor main body 21, the rotational speed of the motor 27 is controlled by the inverter 22 lower than the rotational speed in the case of full load so as to rotate the motor 27 and the screw rotor 33 only with a needed speed, which improves efficiency in the case of partial load.

Further, the screw compressor main body 21 does not comprise a slide valve, so that the compression start position in the case of partial load is the same as that in the case of full load, where capacity control is implemented by the rotational speed of the screw rotor 33. Accordingly, in the case of partial load, a refrigerant gas is ejected from the economizer passages to the compression chambers C1 and C2 between the cylinder 31 and the screw rotor 33 after the compression chambers C1 and C2 are sealed. Therefore, though the refrigerant gas is ejected from the economizer passages to the compression chambers C1 and C2, the capacity of a gas refrigerant sucked from the evaporator 60 side of the screw compressor main body 21 does not decrease. Therefore, in the case of partial load, the rotational speed of the motor 27 and the screw rotor 33 is lowered, and the refrigerant ejected from the economizer passages can exert a cooling effect without reducing the capacity of the refrigerant gas sucked to the compression chambers C1 and C2, which allows great increase of the efficiency in the case of partial load.

Further, the refrigerant, which is cooled in the condenser 40 and then does adiabatic expansion through the first expansion valve 45 to have further temperature decrease, is separated into a liquid refrigerant and a gas refrigerant in the gas-liquid separation tank 50. This gas refrigerant is ejected to the compression chambers C1 and C2 through the economizer circuit 70 and the economizer passages. Here, the enthalpy of the liquid refrigerant lead to the evaporator is lowered to the level equivalent to a saturation pressure value on the upstream of the second expansion means, as a consequence of which the cooling capability is increased and further the refrigerating cycle efficiency is improved.

Consequently, capacity control on the screw compressor main body 21 is performed not by providing a slide valve in the screw compressor main body 21 but by controlling the rotational speed of the motor 27 by the inverter 22, and a low-temperature refrigerant gas is ejected from the gas-liquid separation tank 50 on a downstream side of the condenser 40 and the first expansion valve 45 through the economizer circuit 70 and the economizer passages to the compression chambers C1 and C2 which is in sealed state even in the case of partial load, so that the economizer effect is put forward without reducing the capacity of the refrigerant gas sucked from the evaporator 61 side to the chambers C1 and C2, the combination of which allows great increase of the efficiency in the entire operation field, especially in partial load field.

Further, the screw compressor 20 does not include a slide valve nor a drive cylinder or the like therefor, high-speed rotation of the screw rotor 33 is enabled by the motor 27 by using the inverter 22, and the economizer effect improves efficiency as stated above, the combination of which allows downsizing of the screw compressor 20 and the refrigerating device and reduction of the production costs thereof.

It is noted that in the above embodiment, oil injection is not applied to the compression chamber in the screw compressor main body 21, so that losses attributed to the viscosity of a sliding portion at the time of speed increase can be reduced, which further implements higher efficiency.

Although in the above embodiment, the first and the second expansion valves 45 and 55 are used, it is acceptable to remove the first expansion valve 45. It is also acceptable to remove the gas-liquid separation tank 50. It is further acceptable to use a capillary as an expansion means.

As is clear from the above description, according to the screw compressor of the present invention, capacity control is implemented by controlling the rotational speed of the motor by the inverter so as to rotate the motor and the screw rotor only with the needed number of rotation, so that the efficiency in the case of partial load is increased, and further the absence of a slide valve enables to eject a refrigerant from the economizer passage to the compression chamber which is in a sealed state even in the case of partial load, so that although the refrigerant is ejected from the economizer passage to the compression chamber, the capacity of a sucked refrigerant gas does not decrease. According to the present invention, therefore, in the case of partial load, the rotational speed of the motor and the screw rotor is lowered and the cooling effect due to the refrigerant ejected from the economizer passage can be carried out without reducing the capacity of a refrigerant gas sucked to the compression chamber, which allows ramarkable increase of the efficiency in the case of partial load. In addition, improved efficiency, high-speed rotation of the motor enabled by the inverter, and the absence of a slide valve and a drive cylinder therefor implement downsizing of the screw compressor and reduction of the production costs of the screw compressor.

In addition, according to the refrigerating device of the present invention, there is provided a screw compressor, so that the function and effect of the screw compressor are implemented, and further a refrigerant cooled in the condenser is ejected to the compression chamber through the economizer circuit and the economizer passage, by which a pressurized refrigerant gas inside the compression chamber is surely cooled.

## Claims

1. A screw compressor comprising:
a screw compressor main body (21) without a slide valve, comprised of a compressing portion (26) having a cylinder (31) and a screw rotor (33) fitted into the cylinder (31) in a rotatable manner, a motor (27) for driving the screw rotor (33), and an economizer passage for ejecting a refrigerant gas to a compression chamber (C1, C2) present in between the cylinder (31) and the screw rotor (33) of the compressing portion (26); and
an inverter (22) for controlling a rotational speed of the motor (27) to control a capacity of discharge from the compressing portion (26).

2. A refrigerating device comprising:
a main refrigerant circuit (65) connecting the screw compressor (20) as defined in Claim 1, a condenser (40), expansion means (45, 55), and an evaporator (60) in a loop shape; and
an economizer circuit connecting the main refrigerant circuit (65) on a downstream side of the condenser (40) and an upstream side of the evaporator (60) to the economizer passage.

3. The refrigerating device as defined in Claim 2, wherein the expansion means are comprised of a first expansion means (45) and a second expansion means (55), and the economizer circuit (70) connects the main refrigerant circuit (65) between the first expansion means (45) and the second expansion means (55) to the economizer passage.

4. The refrigerating device as defined in Claim 2, wherein the main refrigerant circuit (65) between the condenser (40) and the evaporator (60) has a gas-liquid separator (50), and a refrigerant gas is supplied from the gas-liquid separator (50) to the compression chamber (C1, C2) through the economizer circuit (70) and the economizer passage.

5. The refrigerating device as defined in Claim 2, wherein in the case of capacity control where a rotational speed of the motor (27) is controlled by the inverter (22) to perform partial load operation of the screw compressor (20), the gas refrigerant separated in the gas-liquid separator (50) is ejected to the compression chamber (C1, C2) through the economizer circuit (70) and the economizer passage.

6. The refrigerating device as defined in Claim 2, wherein the economizer circuit (70) is interconnected through the economizer passages to a first compression chamber (C1) and a second compression chamber (C2) formed in between the cylinder and the screw rotor.
